(19) Europäisches Patentamt / European Patent Office / Office européen des brevets

(11) **EP 4 245 009 B1**

(12) **EUROPEAN PATENT SPECIFICATION**

(45) Date of publication and mention
of the grant of the patent:
**10.06.2026 Bulletin 2026/24**

(21) Application number: **21790481.2**

(22) Date of filing: **12.10.2021**

(51) International Patent Classification (IPC):
***H04L 9/00*** *(2022.01)*     ***H04L 9/32*** *(2006.01)*

(52) Cooperative Patent Classification (CPC):
**H04L 9/3239; H04L 9/3247; H04L 9/50**

(86) International application number:
**PCT/EP2021/078206**

(87) International publication number:
**WO 2022/100945 (19.05.2022 Gazette 2022/20)**

(54) **MERKLE PROOF ENTITY**

MERKLE-PROOF-ENTITÄT

ENTITÉ DE PREUVE DE MERKLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.11.2020 GB 202017729**

(43) Date of publication of application:
**20.09.2023 Bulletin 2023/38**

(73) Proprietor: **nChain Licensing AG
6300 Zug (CH)**

(72) Inventors:
• **ZHANG, Wei
London W1W 8AP (GB)**
• **AMMAR, Bassem
London W1W 8AP (GB)**
• **DAVIES, Jack, Owen
London W1W 8AP (GB)**
• **WRIGHT, Craig, Steven
London W1W 8AP (GB)**

(74) Representative: **Page White Farrer
Bedford House
21a John Street
London WC1N 2BF (GB)**

(56) References cited:
**WO-A1-2020/165676**

• **ALIN TOMESCU ET AL: "Catena: Preventing Lies
with Bitcoin", IACR, INTERNATIONAL
ASSOCIATION FOR CRYPTOLOGIC RESEARCH,
vol. 20161115:150307, 13 November 2016
(2016-11-13), pages 1 - 17, XP061022070**

**Description**

<u>TECHNICAL FIELD</u>

The present disclosure relates to methods of providing and obtaining proof that a blockchain transaction exists on a blockchain.

<u>BACKGROUND</u>

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain comprises a chain of blocks of data, wherein each block comprises one or more transactions. Each transaction, other than so-called "coinbase transactions", points back to a preceding transaction in a sequence which may span one or more blocks going back to one or more coinbase transactions. Coinbase transactions are discussed further below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at some nodes, and the publication of blocks can be achieved through the publication of mere block headers.

The transactions in the blockchain may be used for one or more of the following purposes: to convey a digital asset (i.e. a number of digital tokens), to order a set of entries in a virtualised ledger or registry, to receive and process timestamp entries, and/or to time-order index pointers. A blockchain can also be exploited in order to layer additional functionality on top of the blockchain. For example blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in more detail later. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction comprises one or more inputs and one or more outputs. Any spendable output comprises an element specifying an amount of the digital asset that is derivable from the proceeding sequence of transactions. The spendable output is sometimes referred to as a UTXO ("unspent transaction output"). The output may further comprise a locking script specifying a condition for the future redemption of the output. A locking script is a predicate defining the conditions necessary to validate and transfer digital tokens or assets. Each input of a transaction (other than a coinbase transaction) comprises a pointer (i.e. a reference) to such an output in a preceding transaction, and may further comprise an unlocking script for unlocking the locking script of the pointed-to output. So consider a pair of transactions, call them a first and a second transaction (or "target" transaction). The first transaction comprises at least one output specifying an amount of the digital asset, and comprising a locking script defining one or more conditions of unlocking the output. The second, target transaction comprises at least one input, comprising a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

Prior art solutions are disclosed in documents ALIN TOMESCU ET AL: "Catena: Preventing Lies with Bitcoin", IACR, INTERNATIONAL ASSOCIATION FOR CRYPTOLOGIC RESEARCH, vol. 20161115:150307, 13 November 2016 (2016-11-13), pages 1-17 and WO 2020/165676 A1.

## SUMMARY

The objects of the present invention are achieved by means of the appended set of claims.

Merkle proofs are commonly used to verify the existence of transactions on the blockchain A party (e.g. a user) wanting to verify that a particular transaction exists on the blockchain can seek a Merkle proof from a blockchain node. If, using the received Merkle proof, the transaction can be traced to a value matching a Merkle root included in a block of the blockchain, the user can be confident that the transaction exists on the blockchain. Note that additional checks may be required for absolute certainty.

Currently the only entities that provide Merkle proofs are blockchain nodes (a.k.a. miners). As mentioned above, blockchain nodes are primarily concerned with transaction validation, and block construction and publication.

The use of blockchain technology is ever increasing and as such blockchain systems need to be able to scale in order to match the increased usage and demand. One approach to scaling blockchain systems is to expand the size of the blocks, the rate of transactions, and to use the blockchain technology as an immutable ledger for various data applications. This will dramatically increase the size of the blockchain, and the amount of processing spent on transaction validation. Therefore resources for storing the full blockchain, validating transactions and responding to queries on transactions may be too costly (in terms of storage and processing requirements) for end users and service providers. Therefore there is a need for an entity that can provide proof that a transaction exists on the blockchain without having to store the full blockchain.

Therefore there is a need for a more resource efficient entity that can provide proof that a transaction exists on the blockchain.

According to one aspect disclosed herein, there is provided a computer-implemented method of providing proof that a blockchain transaction exists on a blockchain, wherein the method is performed by a Merkle proof entity configured to store a set of transaction identifiers of respective blockchain transactions but not to publish new blockchain blocks to the blockchain network, and wherein the method comprises: obtaining a target transaction identifier of a target blockchain transaction, wherein the target transaction identifier forms part of the stored set of transaction identifiers; obtaining a target Merkle proof for the target blockchain transaction, wherein a corresponding target Merkle root is contained within a blockheader of the blockchain; and outputting the target Merkle proof for use by the requesting party as proof that the target blockchain transaction exists on the blockchain.

The Merkle proof entity, also referred to below as a Merkle proof server (MPS), is able to provide Merkle proofs to a requesting party without having to construct and/or publish new blockchain blocks to the blockchain network, thus being less resource intensive than a blockchain node. Publishing a new block to the blockchain network means distributing a previously unseen block comprising transactions that are yet to be published in a block on the blockchain. Moreover, in some examples the MPS need not store the entire blockchain, thus having a significantly reduced storage requirement compared to blockchain nodes. Data storage, data search, and data retrieval is optimized by storing only the relevant information, which in this case is as little as the stored transaction identifiers.

The MPS may provide a Merkle proof for any published transaction by storing only a respective transaction identifier of that transaction (i.e. not the transaction data itself). In some instances, the MPS may only store the transaction identifiers of a particular set of blockchain transactions, e.g. those relating to a particular application or service, e.g. Tokenized or Metanet transactions. The MPS may then be used to verify the existence of any Tokenized or Metanet transaction.

The MPS is required to store the transaction IDs (TxID) of all published transactions (or at least a set of published transactions). The MPS may support queries by transaction identifiers (TxIDs) or the full transactions.

The MPS does not perform operations of constructing and/or publishing bocks on the blockchain. In other words, Merkle proof entity is not a blockchain node. In some examples, the Merkle proof entity does not store any blockchain transactions. In other examples, the Merkle proof entity stores only one blockchain transaction per block. In yet other examples, the Merkle proof entity stores more than one but less than all of the blockchain transactions per block.

According to another aspect disclosed herein, there is provided a computer-implemented method of obtaining proof that a blockchain transaction exists on a blockchain, wherein a Merkle proof entity stores a set of transaction identifiers of respective blockchain transactions, wherein the Merkle proof entity is configured to store a set of transaction identifiers of respective blockchain transactions but not to publish new blockchain blocks to the blockchain network, wherein the method is performed by a requesting party and comprises: sending, to the Merkle proof entity, a target blockchain transaction and/or a target transaction identifier of the target transaction; and obtaining, from the Merkle proof entity, a target Merkle proof for the target blockchain transaction, wherein the Merkle proof is based on one or more of the stored set of transaction identifiers.

## BRIEF DESCRIPTION OF THE DRAWINGS

To assist understanding of embodiments of the present disclosure and to show how such embodiments may be put into effect, reference is made, by way of example only, to the accompanying drawings in which:

Figure 1 is a schematic block diagram of a system for implementing a blockchain,

Figure 2 schematically illustrates some examples of transactions which may be recorded in a blockchain,

Figure 3A is a schematic block diagram of a client application,

Figure 3B is a schematic mock-up of an example user interface that may be presented by the client application of Figure 3A,

Figure 4 schematically illustrates an example Merkle tree,

Figure 5 schematically illustrates an example Merkle proof,

Figures 6A and 6b schematically illustrate example systems according to some embodiments of the present invention,

Figure 7 schematically illustrates data stored by a Merkle proof entity according to some embodiments of the present invention, and

Figure 8 illustrates an example method according to some embodiments of the present invention.

## DETAILED DESCRIPTION OF EMBODIMENTS

EXAMPLE SYSTEM OVERVIEW

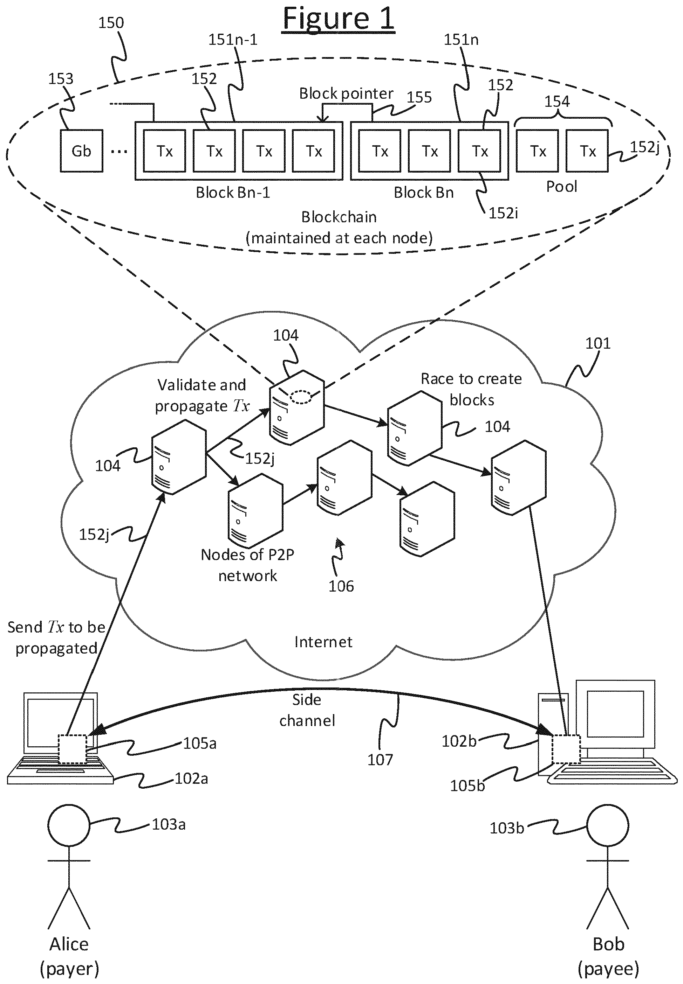

Figure 1 shows an example system 100 for implementing a blockchain 150. The system 100 may comprise a packet-switched network 101, typically a wide-area internetwork such as the Internet. The packet-switched network 101 comprises a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 comprises computer equipment of a peer, with different ones of the nodes 104 belonging to different peers. Each blockchain node 104 comprises processing apparatus comprising one or more processors, e.g. one or more central processing units (CPUs), accelerator processors, application specific processors and/or field programmable gate arrays (FPGAs), and other equipment such as application specific integrated circuits (ASICs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of blockchain nodes 104 in the distributed or blockchain network 106. As mentioned above, maintaining a copy of the blockchain 150 does not necessarily mean storing the blockchain 150 in full. Instead, the blockchain 150 may be pruned of data so long as each blockchain node 150 stores the block header (discussed below) of each block 151. Each block 151 in the chain comprises one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 comprises at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also comprises a block pointer 155 pointing back to the previously created block 151 in the chain so as to define a sequential order to the blocks 151. Each transaction 152 (other than a coinbase transaction) comprises a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set (or "pool") 154 of transactions 152 waiting to be incorporated into blocks 151. The ordered pool 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input comprises a pointer referencing the output of a preceding transaction 152i in the sequence of transactions, specifying that this output is to be redeemed or "spent" in the present transaction 152j. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also comprises the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when a party 103, such as an individual user or an organization, wishes to enact a new transaction 152j (either manually or by an automated process employed by the party), then the enacting party sends the new transaction from its computer terminal 102 to a recipient. The enacting party or the recipient will eventually send this transaction to one or more of the blockchain nodes 104 of the network 106 (which nowadays are typically servers or data centres, but could in principle be other user terminals). It is also not excluded that the party 103 enacting the new transaction 152j could send the transaction directly to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may comprise checking that the cryptographic signature or other authorisation of the party 103 included in the input of the new transaction 152j matches a condition defined in the output of the preceding transaction 152i which the new transaction assigns, wherein this condition typically comprises at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned (e.g. spent) is whether it has yet been validly redeemed by the input of another, onward transaction 152j according to the blockchain node protocol. Another condition for a transaction to be valid is that the output of the preceding transaction 152i which it attempts to redeem has not already been redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered pool 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this comprises searching for a "nonce" value such that when the nonce is concatenated with a representation of the ordered pool of pending transactions 154 and hashed, then the output of the hash meets a predetermined condition. E.g. the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. The significant amount of effort, for example in the form of hash, required to create a proof-of-work solution signals the intent of the first node 104 to follow the rules of the blockchain protocol. Such rules include not accepting a transaction as valid if it assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the pool of yet-to-be published transactions 154 at any given time, depending on when they started searching for a solution or the order in which the transactions were received. Whoever solves their respective puzzle first defines which transactions 152 are included in the next new block 151n and in which order, and the current pool 154 of unpublished transactions is updated. The blockchain nodes 104 then continue to race to create a block from the newly-defined ordered pool of unpublished transactions 154, and so forth. A protocol also exists for resolving any "fork" that may arise, which is where two blockchain nodes104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to newly assign an additional, accepted amount of the digital asset in a new special kind of transaction which distributes an additional defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction" or "generation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server comprising one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network 106 but do not participate in validating transactions or constructing blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network 106; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This comprises first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered pool of pending transactions 154 maintained at a given blockchain node 104, that blockchain node 104 will start competing to solve the proof-of-work puzzle on the latest version of their respective pool of 154 including the new transaction 152 (recall that other blockchain nodes 104 may be trying to solve the puzzle based on a different pool of transactions 154, but whoever gets there first will define the set of transactions that are included in the latest block 151. Eventually a blockchain node 104 will solve the puzzle for a part of the ordered pool 154 which includes Alice's transaction 152j). Once the proof-of-work has been done for the pool 154 including the new transaction 152j, it immutably becomes part of one of the blocks 151 in the blockchain 150. Each transaction 152 comprises a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

UTXO-BASED MODEL

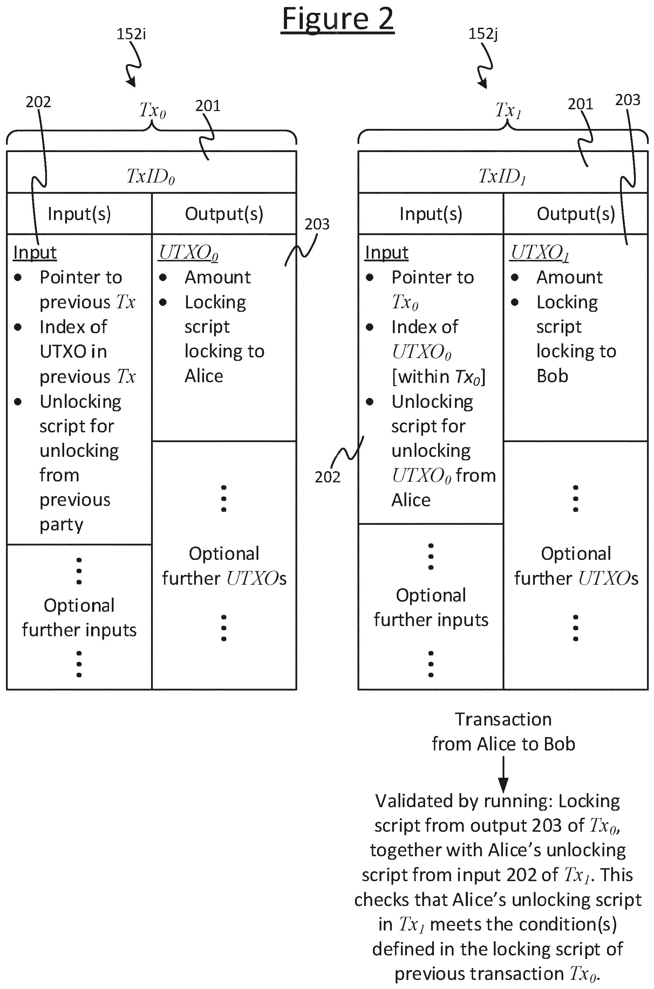

Figure 2 illustrates an example transaction protocol. This is an example of a UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled *"Tx₁"*. It takes an amount of the digital asset that is locked to Alice in the output 203 of a preceding transaction 152i in the sequence, and transfers at least some of this to Bob. The preceding transaction 152i is labelled *"Tx₀"* in Figure 2. $Tx_0$ and $Tx_1$ are just arbitrary labels. They do not necessarily mean that $Tx_0$ is the first transaction in the blockchain 151, nor that $Tx_1$ is the immediate next transaction in the pool 154. $Tx_1$ could point back to any preceding (i.e. antecedent) transaction that still has an unspent output 203 locked to Alice.

The preceding transaction $Tx_0$ may already have been validated and included in a block 151 of the blockchain 150 at the time when Alice creates her new transaction $Tx_1,$ or at least by the time she sends it to the network 106. It may already have been included in one of the blocks 151 at that time, or it may be still waiting in the ordered set 154 in which case it will soon be included in a new block 151. Alternatively $Tx_0$ and $Tx_1$ could be created and sent to the network 106 together, or $Tx_0$ could even be sent after $Tx_1$ if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction $Tx_0$ comprises a particular UTXO, labelled here $UTXO_0$. Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). I.e. the locking script defines an unlocking condition, typically comprising a condition that the unlocking script in the input of the subsequent transaction comprises the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of Txocomprises a locking script [Checksig $P_A$] which requires a signature Sig $P_A$ of Alice in order for $UTXO_0$ to be redeemed (strictly, in order for a subsequent transaction attempting to redeem $UTXO_0$ to be valid). [Checksig $P_A$] contains a representation (i.e. a hash) of the public key $P_A$ from a public-private key pair of Alice. The input 202 of $Tx_1$ comprises a pointer pointing back to $Tx_1$ (e.g. by means of its transaction ID, $TxID_0,$ which in embodiments is the hash of the whole transaction $Tx_0$). The input 202 of $Tx_1$ comprises an index identifying $UTXO_0$ within $Tx_0,$ to identify it amongst any other possible outputs of $Tx_0.$ The input 202 of $Tx_1$ further comprises an unlocking script <Sig $P_A$> which comprises a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction $Tx_1$ arrives at a blockchain node 104, the node applies the node protocol. This comprises running the locking script and unlocking script together to check whether the unlocking script meets the condition defined in the locking script (where this condition may comprise one or more criteria). In embodiments this involves concatenating the two scripts:

<Sig $P_A$> <$P_A$> ‖ [Checksig $P_A$]

where "‖" represents a concatenation and "<...>" means place the data on the stack, and "[...]" is a function comprised by the locking script (in this example a stack-based language). Equivalently the scripts may be run one after the other, with a common stack, rather than concatenating the scripts. Either way, when run together, the scripts use the public key $P_A$ of Alice, as included in the locking script in the output of $Tx_0,$ to authenticate that the unlocking script in the input of $Tx_1$ contains the signature of Alice signing the expected portion of data. The expected portion of data itself (the "message") also needs to be included in order to perform this authentication. In embodiments the signed data comprises the whole of $Tx_1$ (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically comprises hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in $Tx_1$ meets the one or more conditions specified in the locking script of $Tx_0$ (so in the example shown, if Alice's signature is provided in $Tx_1$ and authenticated), then the blockchain node 104 deems $Tx_1$ valid. This means that the blockchain node 104 will add $Tx_1$ to the ordered pool of pending transactions 154. The blockchain node 104 will also forward the transaction $Tx_1$ to one or more other blockchain nodes 104 in the network 106, so that it will be propagated throughout the network 106. Once $Tx_1$ has been validated and included in the blockchain 150, this defines $UTXO_0$ from $Tx_0$ as spent. Note that $Tx_1$ can only be valid if it spends an unspent transaction output 203. If it attempts to spend an output that has already been spent by another transaction 152, then $Tx_1$ will be invalid even if all the other conditions are met. Hence the blockchain node 104 also needs to check whether the referenced UTXO in the preceding transaction $Tx_0$ is already spent (i.e. whether it has already formed a valid input to another valid transaction). This is one reason why it is important for the blockchain 150 to impose a defined order on the transactions 152. In practice a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However the amount from the UTXO can be split between multiple outputs of the next transaction. E.g. the amount defined in $UTXO_0$ in $Tx_0$ can be split between multiple UTXOs in $Tx_1$. Hence if Alice does not want to give Bob all of the amount defined in $UTXO_0$, she can use the remainder to give herself change in a second output of $Tx_1$, or pay another party.

In practice Alice will also usually need to include a fee for the bitcoin node 104 that successfully includes her transaction 104 in a block 151. If Alice does not include such a fee, $Tx_0$ may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. E.g. say a pointer to $UTXO_0$ is the only input to $Tx_2$, and $Tx_1$ has only one output $UTXO_1$. If the amount of the digital asset specified in $UTXO_0$ is greater than the amount specified in $UTXO_2$, then the difference may be assigned by the node 104 that wins the proof-of-work race to create the block containing $UTXO_1$. Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. E.g. the data could comprise a document which it is desired to store in the blockchain.

Typically an input of a transaction contains a digital signature corresponding to a public key $P_A$. In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically comprises the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

CLIENT SOFTWARE

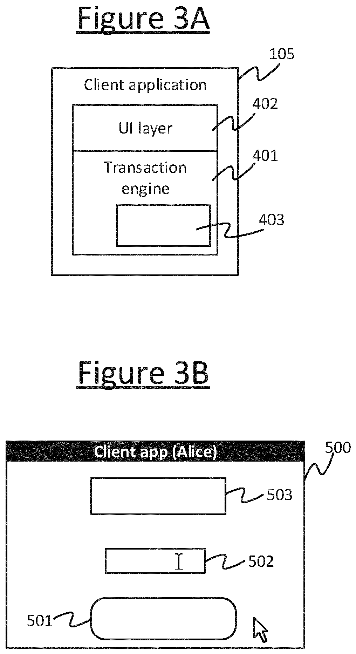

Figure 3A illustrates an example implementation of the client application 105 for implementing embodiments of the presently disclosed scheme. The client application 105 comprises a transaction engine 401 and a user interface (UI) layer 402. The transaction engine 401 is configured to implement the underlying transaction-related functionality of the client 105, such as to formulate transactions 152, receive and/or send transactions and/or other data over the side channel 301, and/or send transactions to one or more nodes 104 to be propagated through the blockchain network 106, in accordance with the schemes discussed above and as discussed in further detail shortly.

The UI layer 402 is configured to render a user interface via a user input/output (I/O) means of the respective user's computer equipment 102, including outputting information to the respective user 103 via a user output means of the equipment 102, and receiving inputs back from the respective user 103 via a user input means of the equipment 102. For example the user output means could comprise one or more display screens (touch or non-touch screen) for providing a visual output, one or more speakers for providing an audio output, and/or one or more haptic output devices for providing a tactile output, etc. The user input means could comprise for example the input array of one or more touch screens (the same or different as that/those used for the output means); one or more cursor-based devices such as mouse, trackpad or trackball; one or more microphones and speech or voice recognition algorithms for receiving a speech or vocal input; one or more gesture-based input devices for receiving the input in the form of manual or bodily gestures; or one or more mechanical buttons, switches or joysticks, etc.

Note: whilst the various functionality herein may be described as being integrated into the same client application 105, this is not necessarily limiting and instead they could be implemented in a suite of two or more distinct applications, e.g. one being a plug-in to the other or interfacing via an API (application programming interface). For instance, the functionality of the transaction engine 401 may be implemented in a separate application than the UI layer 402, or the functionality of a given module such as the transaction engine 401 could be split between more than one application. Nor is it excluded that some or all of the described functionality could be implemented at, say, the operating system layer. Where reference is made anywhere herein to a single or given application 105, or such like, it will be appreciated that this is just by way of example, and more generally the described functionality could be implemented in any form of software.

Figure 3B gives a mock-up of an example of the user interface (UI) 500 which may be rendered by the UI layer 402 of the client application 105a on Alice's equipment 102a. It will be appreciated that a similar UI may be rendered by the client 105b on Bob's equipment 102b, or that of any other party.

By way of illustration Figure 3B shows the UI 500 from Alice's perspective. The UI 500 may comprise one or more UI elements 501, 502, 502 rendered as distinct UI elements via the user output means.

For example, the UI elements may comprise one or more user-selectable elements 501 which may be, such as different on-screen buttons, or different options in a menu, or such like. The user input means is arranged to enable the user 103 (in this case Alice 103a) to select or otherwise operate one of the options, such as by clicking or touching the UI element on-screen, or speaking a name of the desired option (N.B. the term "manual" as used herein is meant only to contrast against automatic, and does not necessarily limit to the use of the hand or hands).

Alternatively or additionally, the UI elements may comprise one or more data entry fields 502. These data entry fields are rendered via the user output means, e.g. on-screen, and the data can be entered into the fields through the user input means, e.g. a keyboard or touchscreen. Alternatively the data could be received orally for example based on speech recognition.

Alternatively or additionally, the UI elements may comprise one or more information elements 503 output to output information to the user. E.g. this/these could be rendered on screen or audibly.

It will be appreciated that the particular means of rendering the various UI elements, selecting the options and entering data is not material. The functionality of these UI elements will be discussed in more detail shortly. It will also be appreciated that the UI 500 shown in Figure 3 is only a schematized mock-up and in practice it may comprise one or more further UI elements, which for conciseness are not illustrated.

MERKLE TREES

Merkle Trees are hierarchical data structures that enable secure verification of collections of data. In a Merkle tree, each node in the tree has been given an index pair $(i,j)$ and is represented as $N(i,j)$. The indices $i, j$ are simply numerical labels that are related to a specific position in the tree.

An important feature of the Merkle tree is that the construction of each of its nodes is governed by the following equations

$$N(i,j) = \begin{cases} H(D_i) & i = j \\ H\big(N(i,k) \parallel N(k+1,j)\big) & i \neq j \end{cases},$$

where and H is a cryptographic hash function.

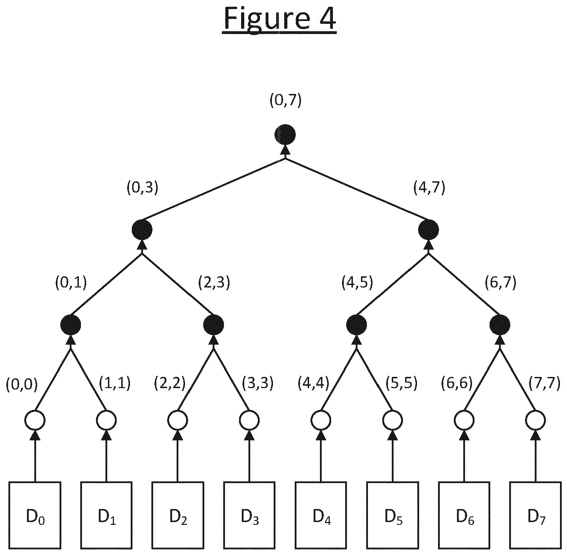

A binary Merkle tree constructed according to these equations is shown in Figure 4. As shown, we can see that the $i = j$ case corresponds to a leaf node, which is simply the hash of the corresponding $i^{th}$ packet of data $D_i$. The $i \neq j$ case corresponds to an internal or parent node, which is generated by recursively hashing and concatenating child nodes until one parent (the Merkle root) is found.

For example, the node N(0,3) is constructed from the four data packets $D_0, ... , D_3$ as

$$N(0,3) = H\big(N(0,1) \parallel N(2,3)\big)$$

$$= \big[H\big(N(0,0) \parallel N(1,1)\big) \parallel H\big(N(2,2) \parallel N(3,3)\big)\big]$$

$$= \big[H\big(H(D_0) \parallel H(D_1)\big) \parallel H\big(H(D_2) \parallel H(D_3)\big)\big].$$

The tree depth M is defined as the lowest level of nodes in the tree, and the depth m of a node is the level at which the node exists. For example, $m_{root} = 0$ and $m_{leaf} = M$, where M = 3 in Figure 4.

For Merkle trees in Bitcoin and some other blockchains, the hash function is double SHA256, which is to apply the standard hash function SHA-256 twice: $H(x) = SHA256(SHA256(x))$.

**Merkle proofs**

The primary function of a Merkle tree is to verify that some data packet $D_i$ is a member of a list or set of $N$ data packets $\mathcal{D} \in \{D_0, ... , D_{N-1}\}$. The mechanism for verification is known as a Merkle proof and involves obtaining a set of hashes known as the Merkle path for a given data packet $D_i$ and Merkle root R. The Merkle proof for a data packet is simply the minimum list of hashes required to reconstruct the root R by way of repeated hashing and concatenation, often referred to as the 'authentication proof'.

A proof of existence could be performed trivially if all packets $D_0, ..., D_{N-1}$ and their order are known to the prover. This does however require a much larger storage overhead than the Merkle proof, as well as requiring that the entire data set is available to the prover. The comparison between using a Merkle proof and using the entire list is shown in the table below, where we have used a binary Merkle tree and assumed that the number of data blocks $N$ is exactly equal to an integer power 2.

The following table shows the relationship between the number of leaf nodes in a Merkle tree and the number of hashes required for a Merkle proof (or Merkle proof).

| | | | | | Merkle tree |
|---|---|---|---|---|---|
| No. data packets | 32 | 256 | 1024 | 1048576 | $N = 2^M$ |
| No. hashes required for proof of existence | 5 | 8 | 10 | 20 | $M = \log_2 N$ |

In this simplified scenario - where the number of data packets is equal to the number of leaf nodes - we find that the number of hash values required to compute a Merkle proof scales logarithmically. It is clearly far more efficient and practical to compute a Merkle proof involving $\log_2 N$ hashes than to store $N$ data hashes and compute the explicit proof.

**Method**

If, given a Merkle root $R$, we wish to prove that the data block $D_0$ belongs to the ordered list $\mathcal{D} \in \{D_0, ... , D_{N-1}\}$ represented by $R$ we can perform a Merkle proof as follows

    i. Obtain the Merkle root $R$ from a trusted source.
    ii. Obtain the Merkle proof $\Gamma$ from a source. In this case, $\Gamma$ is the set of hashes:

$$\Gamma = \{N(1,1),\ N(2,3),\ N(4,7)\}.$$

iii. Compute a Merkle proof using $D_1$ and $\Gamma$ as follows:

a. Hash the data block to obtain:

$$N(0,0) = H(D_0).$$

b. Concatenate with N(1,1) and hash to obtain:

$$N(0,1) = H\big(N(0,0) \parallel N(1,1)\big).$$

c. Concatenate with N(2,3) and hash to obtain:

$$N(0,3) = H\big(N(0,1) \parallel N(2,3)\big).$$

d. Concatenate with N(4,7) and hash to obtain the root:

$$N(0,7) = H\big(N(0,3) \parallel N(4,7)\big),$$

$$R' = N(0,7).$$

a. Compare the calculated root $R'$ with the root $R$ obtained in (i):

1. If $R' = R$, the existence of $D_0$ in the tree and therefore the data set $\mathcal{D}$ is confirmed.
2. If $R' \neq R$, the proof has failed and $D_0$ is not confirmed to be a member of $\mathcal{D}$.

This is an efficient mechanism for providing a proof of existence for some data as part of the data set represented by a Merkle tree and its root. For example, if the data $D_0$ corresponded to a blockchain transaction and the root $R$ is publicly available as part of a block header then we can quickly prove that the transaction was included in that block.

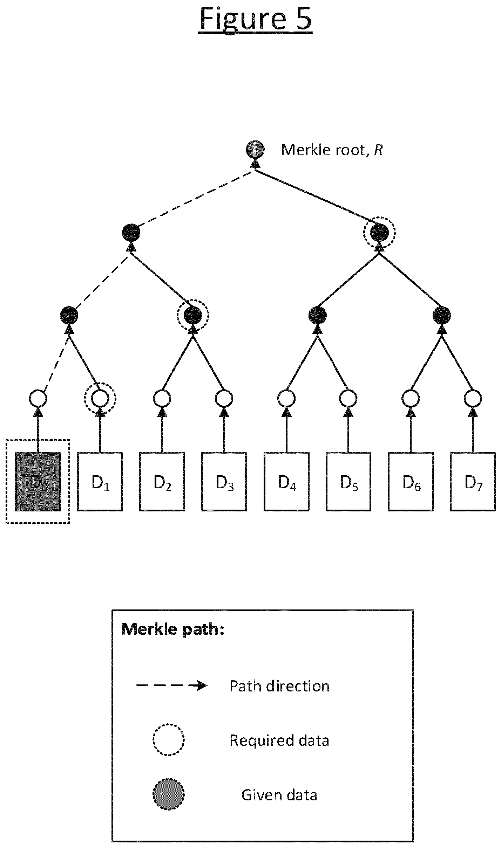

The process of authenticating the existence of $D_0$ as part of our example Merkle tree is shown in Figure 5. This demonstrates that performing the Merkle proof for a given block $D_0$ and root $R$ is effectively traversing the Merkle tree 'upwards' by using only the minimum number of hash values necessary.

**Minimum information to construct the Merkle proof**

When constructing a Merkle proof of a single leaf, the minimal information required is

1. Index of the leaf: the position of the leaf in the leaf layer in the Merkle tree.
2. An ordered list of hash values: the hash values required to calculate the Merkle root.

To explain how the index of the leaf works, consider the Merkle tree in Figure 5. Bob knows the root $R$ but does not know all the leaves of the Tree. The Merkle branch for $D_0$ consists of one index, 0, and three hash values (circled). The index is to indicate whether the provided hash value should be concatenated to the left or to the right of the calculated hash value.

Assume that a Merkle tree has $N = 2^M$ leaves. Given an index $i$ at layer 0, let $i_0 = i$, $b_0 = i_0 \bmod 2$, $p_0 = i_0 + (-1)^{p_0}$, i.e

$$p_0 = \begin{cases} i_0 + 1 & i_0 \text{ is even} \\ i_0 - 1 & i_0 \text{ is odd} \end{cases}$$

$p_0$ is the index of the pair leaf node of the leaf node with index $i_0$. We refer to them as pairs since they are concatenated and hashed to calculate their parent hash node in the Merkle Tree (see above). The node with index $p_0$ is also referred to as "the provided hash" or "the required data" since it must be provided when calculating the Merkle root of

the $i_0$ leaf node.

Thus, we can define at layer m, we have

$$i_m = \frac{i_{m-1} - b_{m-1}}{2}$$

$$b_m = i_m \bmod 2$$

Then the index of the provided hash is

$$p_m = i_m + (-1)^{b_m}$$

The above equations assume that the index starts at 0.

In the context of the present invention, the leaf node with index $i_0$ is a transaction identifier of the target transaction.

PROOF OF EXISTENCE - TRANSACTIONS

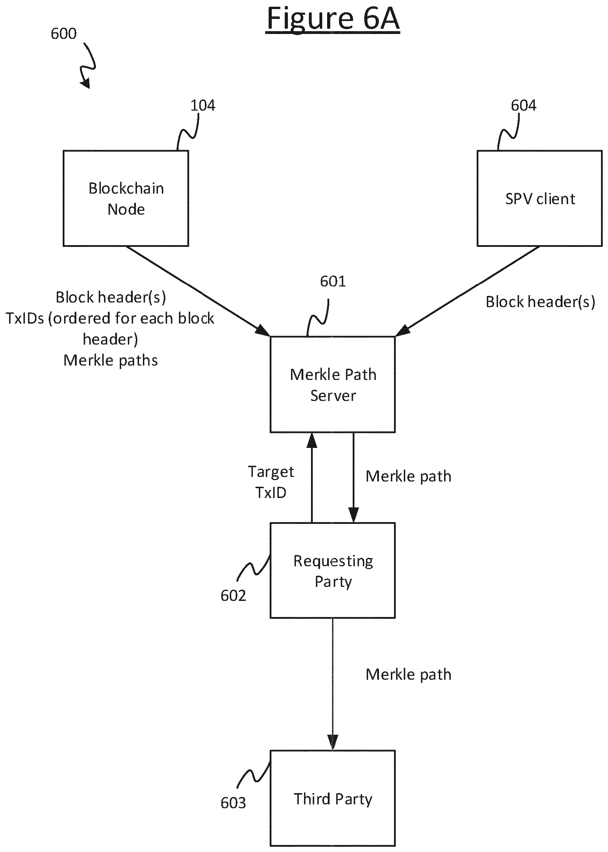

Figure 6A illustrates an example system 600 for implementing embodiments of the present invention. The system comprises a Merkle proof entity (or Merkle proof server (MPS)) 601. Note that the term "Merkle proof entity" is used merely as a convenient label for an entity configured to perform the actions described herein. Similarly, the term "Merkle proof server" does not necessarily mean that the described actions are performed by a server (i.e. one or more server units), although that is one possible implementation.

The MPS 601 is configured to provide proof that a transaction exists on the blockchain 150.

The MPS 601 is configured to store a set of transaction identifiers (TxIDs). Each TxID uniquely identifies a respective transaction. A TxID is a hash (e.g. double-hash) of a transaction. The MPS 601 may store a respective TxID of every single transaction published on the blockchain 150. Alternatively, the MPS 601 may store a respective TxID of only some but not all of the published transactions. For instance, the MPS 601 may store a respective TxID of all transactions having something in common, e.g. all transactions from a particular block, all transactions published after a certain time (in UNIX time or block height), all transactions from a block or blocks published by a particular blockchain node 104, etc.

The MPS 601 is not a blockchain node 104. That is, the MPS 601 is not a mining node or "miner". The MPS 601 may be operated by or connected to a blockchain node, but the MPS 601 itself does not perform operations of performing proof-of-work, constructing blocks, publishing blocks, enforcing consensus rules, etc. In some examples the MPS 601 does not validate transactions. However it is not excluded that the MPS 601 could validate transactions without performing the operations publishing blocks.

Moreover, the MPS 601 does not need to store the full blockchain 150, although that is not excluded. That is, the MPS 601 need not store all of the published transactions. In some examples, the MPS 601 does not store any transactions. Or, the MPS 601 may store a select few of the published transactions, e.g. one or more coinbase transactions.

The MPS 601 is configured to obtain a target transaction identifier, i.e. a transaction of a target transaction. The target transaction is a transaction for which a proof of existence is requested. For instance, the system 600 may comprise one or more requesting parties 602. A requesting party 602 may send the target TxID to the MPS 601 as part of a request for a Merkle proof for the target transaction. In other examples, a third party may send the target TxID to the MPS 601 on behalf of the requesting party 602. In some examples the mere sending of the target TxID to the MPS 601 is taken as a request for a Merkle proof.

Rather than receiving the target TxID, the MPS 601 may instead receive the target transaction itself. That is, the requesting party 602, or a third party, may send the target transaction to the MPS 601. The MPS 601 may then hash (e.g. double hash) the target transaction to obtain the target TxID. It is also not excluded that the MPS 601 may receive both the target TxID and the target transaction. In this example, the MPS 601 may confirm that a (double) hash of the target transaction matches the target TxID, and alert the requesting party 602 if not.

The MPS 601 is also configured to obtain a "target Merkle proof" for the target transaction, i.e. a Merkle proof for proving that the target transaction exists on the blockchain. The target Merkle proof is based on one or more of the stored set of TxIDs since the leaves of the corresponding Merkle tree are in fact TxIDs. Merkle proofs have been described above. The target Merkle proof comprises at least an ordered set of hash values. The number of hash values in the ordered set of hash values is based on the number of leaves in the Merkle tree, i.e. the number of transactions in the block 151 containing the target transaction. The Merkle proof may also include an index of the leaf indicating whether the first hash value in the ordered set of hash values should be concatenated to the left or to the right of the target TxID.

The MPS 601 may store a respective Merkle proof for each transaction (i.e. for each TxID). In this example, obtaining the target Merkle proof comprises extracting the target Merkle proof from storage. For example, the MPS 601 may pre-calculate the Merkle proof for each transaction. When the target TxID is obtained, the MPS 601 looks up the corresponding Merkle proof (each Merkle proof may be associated with a respective TxID in storage).

Rather than, or in addition to storing a respective Merkle proof for each transaction or TxID, the MPS may pre-calculate and store one or more Merkle trees. Each Merkle tree comprises a subset of the stored set of TxIDs, a set of internal hash values (or internal nodes) and a Merkle root. In this example, obtaining the target Merkle proof comprises extracting the Merkle proof (i.e. the required hash values) from the Merkle tree containing the target TxID.

As another example, the MPS 601 may calculate the target Merkle proof in response to obtaining the target TxID. That is, the MPS 601 may use one or more of the stored set of TxIDs to calculate the target Merkle proof (e.g. by calculating a complete Merkle tree and extracting the required hash values). Note that this method requires the MPS 601 to have, in storage, all of the TxIDs from the block 151 comprising the target transaction.

The target Merkle proof may comprise one or more internal hashes, or internal nodes, of a corresponding Merkle tree. In that case, it is useful to provide the requesting party with the indices of those internal hashes so that the requesting party knows whether to concatenate the preceding hash (e.g. the target TxID) to the left or right of the internal hash. Therefore, when extracting the target Merkle proof, the MPS 601 calculates the indices of the internal hashes in the target Merkle proof using the index of the leaf hash, i.e. the TxID of the target transaction. The MPS may need to calculate these indices in order to extract the Merkle proof from the stored tree, i.e. the MPS has a tree stored, and the leaf index allows it to determine which internal nodes to cherry-pick from the tree to extract the correct Merkle proof. Note that at least in some examples, the MPS 601 need calculate only the index of the target TxID. This single index may be enough to determine the required internal hashes.

The MPS 601 is also configured to output the target Merkle proof. For instance, the target Merkle proof may be transmitted directly to the requesting party 602. Or, the target Merkle proof may be published, e.g. on a webpage. The target Merkle proof can be used as proof that the target transaction exists on the blockchain.

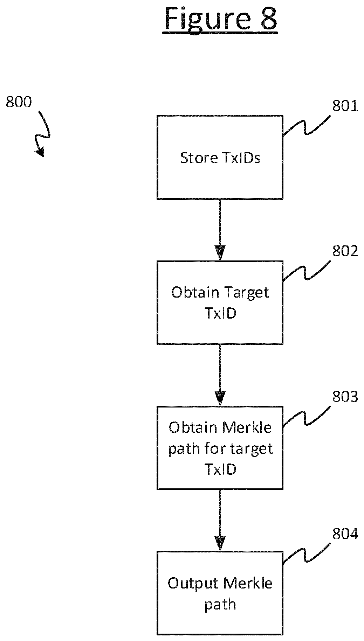

Figure 8 illustrates an example method 800 that may be performed by the MPS 601. At step 801, the MPS stores a set of TxIDs. In some examples the TxIDs are ordered based on the order in which the corresponding transactions appear in a block 151. At step 802, the MPS 601 obtains (e.g. receives) a target TxID. At step 803, the MPS 601 obtains a Merkle proof for the target TxID (i.e. for the target transaction). The MPS 601 may obtain the Merkle proof e.g. from memory or from local storage, or by computing the Merkle proof. At step 804, the MPS outputs the Merkle proof.

In some examples, the MPS 601 also outputs the Merkle root from the block header of the block 151 containing the target transaction. The Merkle root may be output as part of the block header containing the Merkle root, or on its own, or in combination with one or more other data fields of the block header, e.g. the previous block hash. The Merkle root may be output directly to the requesting party 602 or otherwise published.

The MPS 601 may store the TxIDs in subsets based on the block in which the corresponding transactions are published. That is, the TxIDs of transactions from block n may be stored in one subset, the TxIDS of transactions from block n-1 may be stored in a different subset, and so on. The TxIDs in each subset may be stored in an ordered list, where the order of TxIDs matches the order of the corresponding transactions in a given block.

Each block 151 of the blockchain 150 comprises a respective block header. The MPs 601 may store one or more block headers. For instance, the MPS 601 may store a block header for every published block 151. The block headers may be stored in an ordered list. The order of block headers may match the order of the corresponding blocks 151 in the blockchain 150. In some examples, the TxIDs from a given block 151 may be stored in associated with the block header for that block 151.

For security, all fields of the block header should be stored in order to be able to reproduce the block header value and validate the proof of work. However it is not excluded that instead of storing the complete block header, the MPS 601 may in some examples only store one or more but not all of the data fields of the block header. For instance, the MPS 601 may store only the Merkle root contained within the block header. Or, the MPS 601 may store the Merkle root and the previous hash contained within the block header (the previous hash stored in block header n is equal to the n-1th block header).

The MPS 601 may obtain some or all of the stored TxIDs from the blockchain network 106, e.g. from blockchain nodes. All of the TxIDs may be obtained from a single blockchain node 104. Alternatively, the TxIDs may be obtained from multiple nodes, e.g. some from one blockchain node, some from a different blockchain node, etc. The same applies to the block headers. That is, some or all of the stored block headers (or just the stored Merkle roots and/or previous block hashes) may be obtained from a single blockchain node 104 or from across multiple nodes 104. In some examples, the MPS 601 may obtain the TxIDs of all the transactions from a given block (and optionally the block header of that block )from the same blockchain node 104.

In some examples, the MPS 601 may verify some or all of the obtained TxIDs and/or block headers by obtaining the same TxIDs and/or block headers from multiple nodes 104.

Additionally or alternatively, as shown in Figure 6A, some or all of the block headers may be obtained from one or more simplified payment verification (SPV) clients 604. An SPV client is a client application configured to store one, some or all of the block headers of the blockchain and to perform a SPV method. See e.g. https://wiki.bitcoinsv.io/index.php/ Simplified_Payment_Verification for details. For instance, the MPS 601 may operate an SPV client, or have a connection with an SPV client operated by a different entity (not necessarily a different MPS).

In short, to spend a UTXO, a sender using an SPV wallet will pass on the following information to the receiver:

1. The transaction $Tx_0$ that contains the UTXO as an output,
2. The Merkle proof of $Tx_0$,
3. The block header that contains the Merkle root derived from the Merkle proof (or its identifier, e.g., block height),
4. The transaction $Tx_1$ that spends the UTXO.

To validate the information, the receiver computes the Merkle root from the Merkle proof of $Tx_0$. The receiver then compares it with the Merkle root specified in the block header. If they are the same, the receiver accepts that $Tx_0$ is in the blockchain.

As mentioned above, the MPS 601 may store one or more transactions, i.e. raw transaction data. For instance, the MPs 601 may store one transaction per block. The MPS 601 may store the coinbase transaction for each block (recall there is only one coinbase transaction per block). However it is not excluded that the MPS 601 may store a transaction other than the coinbase transaction, or that the MPS 601 may store the respective coinbase transaction of some blocks, and a different transaction of other blocks.

The stored transaction for a given block will be referred to as a "first transaction". This does not necessarily mean the transaction appearing first in a block, although that is true of coinbase transactions. In these examples the MPS 601 may obtain a Merkle proof for the first transaction that is published in the same block as the target transaction. The MPS 601 may then output the Merkle proof for the first transaction, together with the first transaction itself, e.g. to the requesting party 602. This can be used by the requesting party 602 to verify that the target Merkle proof is of the correct length. For example, if the length of the Merkle proof for the first transaction is ten (i.e. ten hash values), then the length of the target Merkle proof should also be ten.

The MPS 601 take the form of computing apparatus (e.g. similar to that shown in Figure 1) comprising one or more user terminals, such as a desktop computer, laptop computer, tablet, smartphone, wearable smart device such as a smart watch, or an on-board computer of a vehicle such as car, etc. Additionally or alternatively, the computing apparatus may comprise a server. A server herein refers to a logical entity which may comprise one or more physical server units located at one or more geographic sites. Where required, distributed or "cloud" computing techniques are in themselves known in the art. The one or more user terminals and/or the one or more server units of the server may be connected to one another via a packet-switched network, which may comprise for example a wide-area internetwork such as the Internet, a mobile cellular network such as a 3GPP network, a wired local area network (LAN) such as an Ethernet network, or a wireless LAN such as a Wi-Fi, Thread or 6LoWPAN network. The computing apparatus comprises a controller and an interface. The controller is operatively coupled to the interface 204. The controller is configured to perform the actions attributed to the MPS. The interface is configured to transmit and receive data, e.g. TxIDs, block headers, Merkle proofs, etc.

Each of the controller and interface may be implemented in the form of software code embodied on computer readable storage and run on processing apparatus comprising one or more processors such as CPUs, work accelerator co-processors such as GPUs, and/or other application specific processors, implemented on one or more computer terminals or units at one or more geographic sites. The storage on which the code is stored may comprise one or more memory devices employing one or more memory media (e.g. electronic or magnetic media), again implemented on one or more computer terminals or units at one or more geographic sites. In embodiments, the controller and/or interface may be implemented on the server. Alternatively, a respective instance of one or both of these components may be implemented in part or even wholly on each of one, some or all of the one or more user terminals. In further examples, the functionality of the above-mentioned components may be split between any combination of the user terminals and the server. Again it is noted that, where required, distributed computing techniques are in themselves known in the art. It is also not excluded that one or more of these components may be implemented in dedicated hardware.

The requesting party 602 will now be described. The requesting party 602 is configured to send a request to the MPs 601 for a Merkle proof. The requesting party 602 may send the target TxID and/or the target transaction to the MPS 601. In response, the requesting party is configured to receive or otherwise obtain the target Merkle proof. The requesting party 602 may use the target Merkle proof to prove that the target transaction exists on the blockchain. For instance, the requesting party 602 may send the target Merkle proof to a receiving party 603, e.g. along with the target transaction. The requesting party 602 may also send the Merkle root (e.g. as part of a block header) of a Merkle tree based on the target transaction to the receiving party 603. The Merkle root may be obtained from the MPS 601.

In some examples, the requesting party 602 may use the target Merkle proof to prove the existence of one or more parent transactions. In this case, if the target transaction is a child transaction, the target Merkle proof proves that each of the parent transactions has been published on the blockchain 150 (the child transaction could not have been published on the blockchain 150 without each of the parent transactions being published on the blockchain 150). In general, a Merkle proof for the most recently published transaction in a chain of transactions proves the existence of all other transactions in that chain.

The requesting party 602 may be (or operate) an SPV client. That is, the SPV client (e.g. operated by a spender) may use the target Merkle proof for performing the SPV method, i.e. by providing another party (e.g. a receiver) 603 with the target Merkle proof. In this case the target transaction may comprise a UTXO, locked to the spender, and referenced by a spending transaction that comprises a UTXO locked to the receiver.

The requesting party 602 may be (or operate) a wallet application. The wallet application may store the target transaction. In an online mode or state (i.e. connected to the MPS 601), the wallet application may obtain the target Merkle proof for the target transaction. The wallet application may then operate in an offline mode or state (i.e. not connected to the MPS 601), the wallet application may provide the target transaction and the target Merkle proof to a receiving party 603 as proof that the target transaction exists on the blockchain.

The requesting party 602 may take the form of Alice 103a or Bob 103b.

The requesting party 602 may be a secondary MPS. A secondary MPS, or an "integrity MPS" is configured to store a set of blockchain transactions (including the target transaction), send a target TxID to the MPS 601 (also referred to as a primary MPS or a "general MPS"), obtain the target Merkle proof and output the target Merkle proof to a secondary requesting party, e.g. the receiving party 603, an end user (e.g. Alice 103a or Bob 103b), etc.

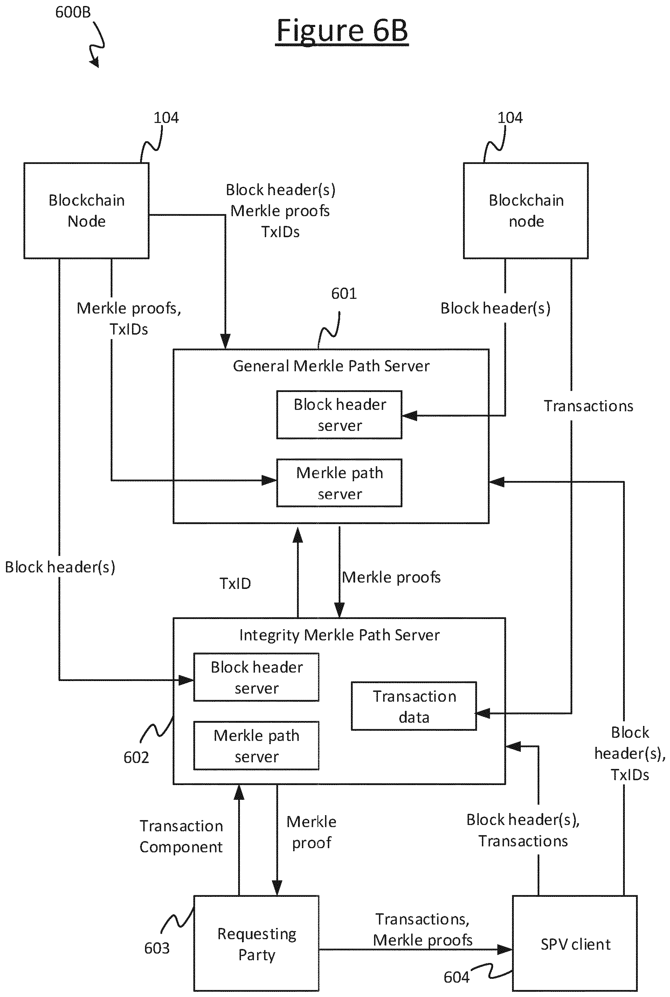

Figure 6B illustrates an example system 600B showing the interaction between the integrity MPS 602 and the general MPS 601. As shown, the system 600B comprises one or more blockchain nodes 104, an integrity MPS 602, a general MPS 601, a requesting party (different to an integrity MPS, e.g. a third party user) 603 and an SPV client 604. The system 600B may comprise multiple requesting parties 603 and/or SPV clients 604.

Starting with the general MPS 601, it is primarily concerned with providing a Merkle proof for a given transaction identifier (TxID). The general MPS 601 may output a Merkle proof to a requesting party 603, or to the integrity MPS 602. For instance, the requesting party 603 or integrity MPS 602 may send a TxID to the general MPS 601, and the general MPS 601 in return provides a Merkle proof. The general MPS 601 may obtain the data required to produce a Merkle proof from one or more sources. For instance, the Merkle proof itself may be obtained from a blockchain node 104. Additionally or alternatively, the general MPS 601 may obtain TxIDs and corresponding block header(s) from a blockchain node 104, or from an SPV client 604. The general MPS 601 can calculate the Merkle proof using the TxIDs and corresponding block header.

As for the integrity MPS 602, it is primarily concerned with providing Merkle proofs to a requesting party 603. The integrity MPS 602 may receive a transaction component (or transaction data field or data item) from a requesting party 603 and in return provide a Merkle proof for the transaction containing that component. The requesting party 603 may in turn send the transaction and Merkle proof to another party, e.g. an SPV client 604. The integrity MPS 602 may obtain the transaction from a blockchain node 104 and/or an SPV client 604. The integrity MPS 601 may also obtain block headers from a blockchain node 104 and/or SPV client 604 to use as part of a Merkle proof, although block headers may be calculated by the integrity MPS 602 if enough data is available.

In general the integrity MPS 602 may obtain multiple Merkle proofs from the general MPS 601, e.g. one for each of the stored transactions. For example, when the integrity MPS receives and stores a new transaction the integrity MPS 602 may send a request to the general MPS 601 for a Merkle proof for the new transaction.

An example implementation of some embodiments of the present invention will now be described.

**General MPS**

The general MPS 601 acts as a dedicated server to provide Merkle proofs to receiving parties, e.g. users. That is, the general MPS 601 is a server that provides the Merkle proof for a given transaction or transaction ID if the transaction is published on the blockchain. The general MPS 601 does not store full transaction data. It can be considered as a complement to a SPV client in the blockchain network with the storage of Merkle trees. More precisely, the general MPS has the following list of storage requirements:

1. An ordered list of block headers representing the chain with the most proof of work (optional requirement)
2. An ordered list of transaction IDs for each block header (core requirement)
3. A pre-calculated Merkle tree for each block header where the Merkle root matches the one specified in the block header (optional requirement)
4. The raw data of the coinbase transaction in each block or any raw data of a transaction in the block for each block header (optional requirement)

The first requirement is to ensure the data integrity of the general MPS 601. The Merkle root in the block header can be used as an integrity check on the lists of transaction IDs. That is, block headers can be used for checking that the TxIDs from a given block, when forming the leaves of a Merkle tree, give the Merkle root in a block header. The first requirement can be dropped, e.g. if the TxIDs are trusted or if the general MPS 601 has a secure access to a trusted SPV client, or any entity that is trusted to be storing the block headers of the chain with the most proof of work.

The second requirement is core as it provides the Merkle leaves in the order they appear in the Merkle tree so that one can reconstruct the Merkle trees. Note that the coinbase transaction ID is always the first leaf or the first hash in the list. The order of the leaves is determined by the blockchain node who constructed the winning block. In Bitcoin SV, the order should reflect the topological order and the first-seen rule.

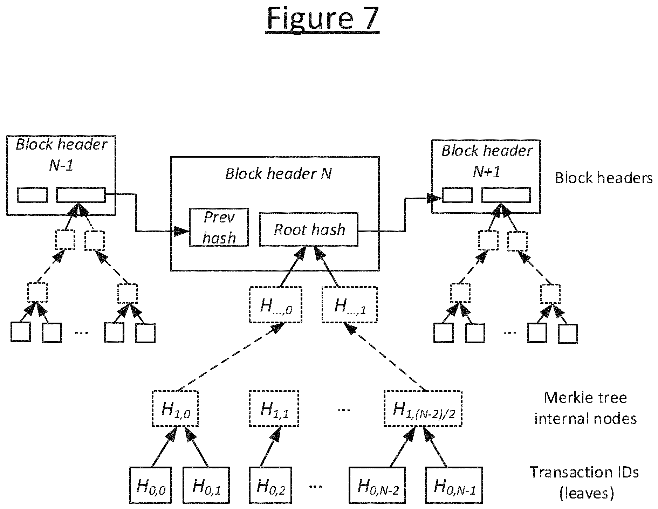

The third requirement provides an option for a trade-off between computation and storage. Figure 7 illustrates the storage requirements, where solid line boxes are required (in some examples) and dashed line boxes are optional. Note that block headers contain additional fields to those shown but in general only the root hash is needed for a Merkle proof. The previous hash may be used to index the root hash. The key point is that the general MPS 601 does not need to store the internal nodes of the Merkle tree. Note that in order to prove the link to the proof of work in a block header, all of the fields of the blockheader are required. The 'Prev Hash' field is singled out to be named because it illustrates the chain relationship between blockheaders. The 'Root Hash' field is singled out because it shows the link to the Merkle Tree. However the link to the proof of work can only be validated when all the blockheader components are provided.

The fourth requirement is to provide a proof of the depth of the Merkle Tree. This is an extra service that can be provided by the general MPS 601 to its users. Being presented with the raw data of a transaction, any verifier can be convinced that the first hash in its Merkle proof is indeed a leaf, because it is computationally infeasible to construct a meaningful transaction for a given hash value that is not a leaf. Moreover, since the length of the Merkle proof implies the depth of the Merkle tree, all Merkle proofs from the same tree have the same length. This service is particularly useful when users do not possess the raw data of the interested transaction.

Given a transaction ID, say $TxID_1$, the general MPS 601 goes through the ordered list of transaction IDs. If the general MPS 601 finds $TxID_1$, it constructs or extracts the Merkle proof for $TxID_1$ and outputs it. Otherwise, the general MPS 601 outputs e.g. "transaction not found". Given the raw data of a transaction, the general MPS 601 can hash the data to obtain the corresponding transaction ID and proceed as above.

When a new block is published, the general MPS 601 obtains the following:

1. the new block header,
2. the ordered list of transaction IDs for the new block, and
3. the raw coinbase transaction.

The general MPS 601 may optionally check that:

1. the new block header has valid proof of work,
2. the Merkle root calculated from the transaction IDs is equal to the Merkle root in the block header, and
3. the hash of the coinbase transaction equals the first element in the leaves.

Note - There is no requirement for the server to obtain raw transactions or run signature verifications on transactions.

The following describes why providing the depth of the Merkle tree is a valuable service. An SPV client takes a transaction ID and a Merkle proof as the input, and outputs true if the Merkle root matches that in one of the block headers and false otherwise. However, this verification does not check whether the length of the Merkle proof matches the length of the Merkle tree due to the lack of necessary information. In some cases, an adversary could submit a shortened Merkle proof in an attempt to prove that a non-existent transaction ID exists. This shortened Merkle proof can be obtained by removing the leaves or subsequent hashes altogether.

The general MPS 601 as a Merkle proof provider is in the best position to provide the required information to verify the length of a Merkle proof. Instead of providing the depth of a Merkle tree explicitly, general MPS 601 provides the raw data of the coinbase transaction and its Merkle proof. It is computationally infeasible to fake the raw transaction data and the Merkle proof. Therefore, it serves as a proof for the depth of the Merkle tree. Knowing the depth of the tree can mitigate the critical vulnerability that is mentioned above. Note that if the SPV is provided with the raw data of the interested transaction and the Merkle proof, then it is secure against this vulnerability. When the SPV does not have the raw data of the interested transaction, we can use the raw data of a coinbase transaction and its Merkle proof to establish the depth of the Merkle tree or the correct length of a Merkle proof with respect to this Merkle tree.

Theoretically, this vulnerability can also be used to fool the general MPS 601 into accepting a Merkle tree whose leaves or any subsequent levels are removed altogether. However, the general MPS 601 may connect to multiple blockchain nodes 104 to ensure the consistency and the correctness of the information received. Moreover, the general MPS 601 can also choose to download the raw data of the coinbase transaction to verify the depth of the Merkle tree for a new block.

From time to time the general MPS 601 may have to deal with competing blocks, reorganisations and orphan blocks, which happen when there is more than one block found for the same block height at the same time. Fortunately this situation does not happen except in the most recent headers and it happens rarely. The blockchain 150 would usually converge to one of the competing chains after one or two blocks. Therefore when the general MPS 601 receives more than one block 151 at the same height, it will keep all of them until the blockchain network converges to the chain with the most proof of work.

## Storage Saving

There is currently a total of roughly 500 million transactions in the BSV global ledger (a similar order number is for BTC). The total TxIDs would require roughly 15 GB of storage space. The BSV blockchain itself stands now at 224 GB. A general MPS 601 would require storing 6.7% of the total blockchain. Moreover, the storage depends on the number of transactions and not their sizes. At block height of 638009 and the block header is 80 bytes, the block headers require a total 49 MB of storage, with 4 MB added every year.

If the general MPS 601 is to store pre-calculated parts of the Merkle Trees to speed the time of Merkle Proof generation: The first layer after the root-node, would consist of 2 nodes and need 2x32 bytes per Tree. So 64 bytes concatenated to the 80 bytes of the block header would save the MPS one hash calculation when it generates the Merkle branch of any tx. i.e. The MPS uses 144 bytes per header instead of 80. The second layer of the Merkle-Tree consists of 4 nodes i.e. 272 bytes per header. And so on. The tenth layer would require 65552 bytes per header and increase the storage required to a total of 39 GB. This should include the 15GB of TXID, and assuming that each block has 1024 transactions.

## Limitations of TxID-only MPS

The general MPS 601 as described has some limitations. Given an unpublished transaction, say $TxID_{payment}$, the general MPS 601 will not be able to verify that the outpoint referenced in the input exists. The reason is that an outpoint is the concatenation of a transaction ID and an index. The general MPS 601 is able to determine whether the transaction ID exists, but it has no information about the number of outputs that transaction has or whether the output is spendable or not. One way to overcome this is to provide the raw data of the transaction that is referenced in the $TxID_{payment}$ to the general MPS 601 as part of the input. An alternative way is for the general MPS 601 to store the raw data of unspent transactions. (Unspent transaction here refers to a transaction that has at least one unspent and spendable output.)

Note that if the general MPS 601 stores only the transaction IDs and the corresponding indices, the general MPS 601 cannot verify or prove that the indices have not been tampered with. The general MPS 601 requires the full raw data in order to verify or prove the integrity of the indices.

Moreover, it will not be able to provide users searching for particular data elements inside the transaction such as locking scripts or flags. Thus, it will not be able to support users using Bloom Filters for example, since they would be filtering transactions based normally on locking scripts and public keys included in the transaction.

This leads to the need for an MPS that can offer information at a more granular level. We refer to this as integrity MPS. An integrity MPS will store the raw data of some transactions. Note that a general MPS 601 can be used to prove the integrity of a published transaction if the full transaction is given by the user. An integrity MPS can be used to prove the integrity of some data extracted from a published transaction by storing the full transactions that are of interest. It does not require users to present the full transaction.

## Integrity MPS

Integrity MPS stores the raw transactions for a set of transactions of interest and their corresponding Merkle proofs. For queries about transactions in this set, this server can provide the raw transaction and its Merkle proof as a proof of its integrity. It also allows searches for partial transactions or data elements in the transaction contents. Transactions of interest can be determined based on the data application such as Weather SV, Tokenized, Metanet, or any other data protocols - or even data strings such as locking scripts, public keys, outpoints and so on. Hence, there may be an integrity-MPS solely for the Weather SV application that is configured to store transactions carrying Weather SV only.

The set of raw transactions that are of interest are passed on to the integrity MPS and persists on the server if they are published. The integrity MPS can be considered as a gateway or has access to the gateways for the application-specific transactions. When the blockchain system scales to terabyte blocks, this would be the most efficient way to maintain an integrity MPS. For other instances, such as a fully decentralised peer-to-peer data application, we must resort to the mechanism of downloading the full block of transactions and prune those that are not of interest or filter them as in bitcoin improvement proposal 37 (BIP37) using Bloom filter.

**During operation**

Integrity MPS, maintaining raw transactions of interest and their Merkle Proof in a Merkle tree, carries out the following steps in some embodiments:

Step 1: obtain raw transactions that are of interest.
Step 2: hash the raw transactions to obtain the transaction ID.
Step 3: query general MPS 601 for its Merkle proof.
Step 4: if the transaction is not published in a block, wait 10 mins and try again.

The dependency on a general MPS 601 in step 3 can be replaced by a mechanism of downloading and pruning, although this would be less efficient. An unpublished transaction in step 4 can be dropped after a pre-defined time limit to avoid congestion. The limit can vary from application to application.

A transaction can be proven to be published on the blockchain 150 by providing its Merkle proof. Alternatively, it can be proven through one of its spent outputs. When an output of a transaction $tx_i$ is spent in a transaction $tx_j$, we call $tx_i$ a parent transaction and $tx_j$ a child transaction. A transaction having multiple outputs implies that it can have multiple children. A transaction having multiple inputs implies that it can have multiple parents. If the raw data of a transaction is available, then the Merkle proof of this transaction is sufficient to prove that all its parents have been published, and we do not need to store the parents' Merkle proofs.

In fact we can generalise this observation, by stating that if we have a chain of transactions, then the Merkle proof of the last transaction in the chain and the raw data of all the transactions can prove the existence of all the transactions in the chain.

This allows us to remove the Merkle proof of a transaction and replace it with the Merkle proof of any of its children. This becomes useful when:

1. Block sizes - the child transaction is published in a much smaller block than the parent transaction, in which case the total size of the child transaction and its Merkle proof is smaller than the size of the Merkle proof for the parent transaction; or
2. Multiple inputs - the child transaction has multiple inputs that are from different transactions, in which case the total size of the child transaction and its Merkle proof is smaller than the total size of all Merkle proofs for its parent transactions.

For example, for a specific application, all transactions can have a dedicated Merkle proof output. From time to time, these outputs are collected and spent in one child transaction. The child transaction and its Merkle proof will be able to prove the integrity and existence of all its parent transactions. Therefore, there is no need to store the Merkle proof for any of the parent transactions.

The observation can be summarised in the following table, which lists the proofs that can be drawn from the provided data.

| No | Merkle Proof of Tx | Raw data of Tx | Usage of provided data |
|---|---|---|---|
| 1 | Provided | Provided | • Can be used to prove the existence of all transaction IDs referenced in its input list and their corresponding index.<br>• Indicates the minimum possible number of outputs of a parent transaction. For example, $TxID_{parent}\|2$ is referenced, then we can say the parent transaction has at least 3 outputs.)<br>• Cannot prove the existence of its children transactions |
| 2 | Provided | Not provided | • Cannot be used to prove the existence of any of its parent transactions<br>• Cannot be used to prove the existence of any of its outputs referenced in a child transaction. Not enough data to prove the existence of the indexes. |

The table shows that an output is proven to exist if:

1. the raw transaction is provided and that transaction exists, OR
2. that output or a higher index output is used in paying an existing transaction.

CONCLUSION

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In preferred embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In other embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

## Claims

1. A computer-implemented method of providing proof that a blockchain transaction exists on a blockchain, wherein the method is performed by a Merkle proof entity (601) configured to store a set of transaction identifiers of a respective stored set of blockchain transactions but not to publish new blockchain blocks to the blockchain network, and wherein the method comprises:

   obtaining a target transaction identifier of a target blockchain transaction, wherein the target transaction identifier forms part of the stored set of transaction identifiers;
   obtaining a target Merkle proof for the target blockchain transaction, wherein a corresponding target Merkle root is contained within a blockheader of the blockchain; and
   outputting the target Merkle proof for use by a requesting party (602) as proof that the target blockchain transaction exists on the blockchain.

2. The method of claim 1, wherein the Merkle proof entity does not store the full blockchain.

3. The method of claim 1 or claim 2, wherein obtaining the target Merkle proof comprises calculating an index of the target transaction identifier within a leaf layer of a corresponding target Merkle tree.

4. The method of claim 3, comprising outputting the index to the requesting party.

5. The method of any preceding claim, wherein said obtaining of the target transaction identifier comprises obtaining the target transaction identifier from the requesting party.

6. The method of any preceding claim, wherein said obtaining of the target transaction identifier comprises obtaining the target blockchain transaction and constructing the target transaction identifier based on the target blockchain transaction.

7. The method of any preceding claim, wherein the Merkle proof entity stores a respective Merkle proof for one or more of the stored set of transaction identifiers including the target transaction identifier, and wherein said obtaining of the target Merkle proof comprises extracting the target Merkle proof from a storage location.

8. The method of claim 1, wherein the Merkle proof entity stores one or more Merkle roots, wherein each Merkle root is based on a respective subset of the stored set of transaction identifiers.

9. The method of claim 8, comprising outputting, to the requesting party, the Merkle root based on the target transaction identifier.

10. The method of claim 8 or claim 9, wherein the Merkle proof entity stores, for each of the one or more Merkle roots, a Merkle tree.

11. The method of claim 10, wherein said obtaining of the target Merkle proof comprises extracting the target Merkle proof from a stored Merkle tree comprising the target transaction identifier.

12. A computer-implemented method of obtaining proof that a blockchain transaction exists on a blockchain, wherein a Merkle proof entity (601) stores a set of transaction identifiers of a respective stored set of blockchain transactions, wherein the Merkle proof entity is configured to store the set of transaction identifiers of the respective stored set of blockchain transactions but not to publish new blockchain blocks to the blockchain network, wherein the method is performed by a requesting party (602) and comprises:

   sending, to the Merkle proof entity, a target blockchain transaction and/or a target transaction identifier of the target transaction; and
   obtaining, from the Merkle proof entity, a target Merkle proof for the target blockchain transaction, wherein the Merkle proof is based on one or more of the stored set of transaction identifiers.

13. The method of claim 12, comprising sending the target Merkle proof to a second requesting party as proof that the target blockchain transaction exists on the blockchain.

14. Computer equipment comprising:

   memory comprising one or more memory units; and
   processing apparatus comprising one or more processing units, wherein the memory stores code arranged to run on the processing apparatus, the code being configured so as when run on the processing apparatus to perform the method of any of claims 1 to 13.

15. A computer program embodied on computer-readable storage and configured so as, when run on one or more processors, to perform the method of any of claims 1 to 13.

**Patentansprüche**

1. Computerimplementiertes Verfahren zum Bereitstellen eines Beweises, dass eine Blockchain-Transaktion auf einer Blockchain existiert, wobei das Verfahren durch eine Merkle-Beweisentität (601) durchgeführt wird, die dazu ausgelegt ist, einen Satz von Transaktionskennungen eines jeweiligen gespeicherten Satzes von Blockchain-Transaktionen zu speichern, aber keine neuen Blockchain-Blöcke in dem Blockchain-Netzwerk zu veröffentlichen, und wobei das Verfahren Folgendes umfasst:

   Erhalten einer Zieltransaktionskennung einer Ziel-Blockchain-Transaktion, wobei die Zieltransaktionskennung Teil des gespeicherten Satzes von Transaktionskennungen bildet;
   Erhalten eines Ziel-Merkle-Beweises für die Ziel-Blockchain-Transaktion, wobei eine entsprechende Ziel-Merkle-Wurzel in einem Block-Header der Blockchain enthalten ist; und
   Ausgeben des Ziel-Merkle-Beweises zur Verwendung durch eine anfordernde Partei (602) als Beweis dafür, dass die Ziel-Blockchain-Transaktion in der Blockchain existiert.

2. Verfahren nach Anspruch 1, wobei die Merkle-Beweisentität die vollständige Blockchain nicht speichert.

3. Verfahren nach Anspruch 1 oder Anspruch 2, wobei das Erhalten des Ziel-Merkle-Beweises das Berechnen eines Index der Zieltransaktionskennung innerhalb einer Blattschicht eines entsprechenden Ziel-Merkle-Baums umfasst.

4. Verfahren nach Anspruch 3, umfassend Ausgeben des Index an die anfordernde Partei.

5. Verfahren nach einem der vorhergehenden Ansprüche, wobei das Erhalten der Zieltransaktionskennung das Erhalten der Zieltransaktionskennung von der anfordernden Partei umfasst.

6. Verfahren nach einem der vorhergehenden Ansprüche, wobei das Erhalten der Zieltransaktionskennung das Erhalten der Ziel-Blockchain-Transaktion und Konstruieren der Zieltransaktionskennung basierend auf der Ziel-Blockchain-Transaktion umfasst.

7. Verfahren nach einem der vorhergehenden Ansprüche, wobei die Merkle-Beweisentität einen jeweiligen Merkle-Beweis für eine oder mehrere des gespeicherten Satzes von Transaktionskennungen einschließlich der Zieltransaktionskennung speichert, und wobei das Erhalten des Ziel-Merkle-Beweises das Extrahieren des Ziel-Merkle-Beweises aus einem Speicherort umfasst.

8. Verfahren nach Anspruch 1, wobei die Merkle-Beweisentität eine oder mehrere Merkle-Wurzeln speichert, wobei jede Merkle-Wurzel auf einem jeweiligen Teilsatz des gespeicherten Satzes von Transaktionskennungen basiert.

9. Verfahren nach Anspruch 8, umfassend Ausgeben, an die anfordernde Partei, der Merkle-Wurzel basierend auf der Zieltransaktionskennung.

10. Verfahren nach Anspruch 8 oder Anspruch 9, wobei die Merkle-Beweisentität für jede der einen oder mehreren Merkle-Wurzeln einen Merkle-Baum speichert.

11. Verfahren nach Anspruch 10, wobei das Erhalten des Ziel-Merkle-Beweises das Extrahieren des Ziel-Merkle-Beweises aus einem gespeicherten Merkle-Baum umfasst, der die Zieltransaktionskennung umfasst.

12. Computerimplementiertes Verfahren zum Erhalten eines Beweises, dass eine Blockchain-Transaktion auf einer Blockchain existiert, wobei eine Merkle-Beweisentität (601) einen Satz von Transaktionskennungen eines jeweiligen gespeicherten Satzes von Blockchain-Transaktionen speichert, wobei die Merkle-Beweisentität dazu ausgelegt ist, den Satz von Transaktionskennungen des jeweiligen gespeicherten Satzes von Blockchain-Transaktionen zu speichern, aber keine neuen Blockchain-Blöcke in dem Blockchain-Netzwerk zu veröffentlichen, wobei das Verfahren durch eine anfordernde Partei (602) durchgeführt wird und Folgendes umfasst:

Senden, an die Merkle-Beweisentität, einer Ziel-Blockchain-Transaktion und/oder einer Zieltransaktionskennung der Zieltransaktion; und
Erhalten, von der Merkle-Beweisentität, eines Ziel-Merkle-Beweises für die Ziel-Blockchain-Transaktion, wobei der Merkle-Beweis auf einer oder mehreren des gespeicherten Satzes von Transaktionskennungen basiert.

13. Verfahren nach Anspruch 12, umfassend Senden des Ziel-Merkle-Beweises an eine zweite anfordernde Partei als Beweis dafür, dass die Ziel-Blockchain-Transaktion auf der Blockchain existiert.

14. Computerausrüstung, umfassend:

einen Speicher, der eine oder mehrere Speichereinheiten umfasst; und
eine Verarbeitungseinrichtung, die eine oder mehrere Verarbeitungseinheiten umfasst, wobei der Speicher Code speichert, der eingerichtet ist, auf der Verarbeitungseinrichtung ausgeführt zu werden, wobei der Code dazu ausgelegt ist, das Verfahren nach einem der Ansprüche 1 bis 13 durchzuführen, wenn er auf der Verarbeitungseinrichtung ausgeführt wird.

15. Computerprogramm, das auf einer computerlesbaren Speicherung verkörpert und dazu ausgelegt ist, das Verfahren nach einem der Ansprüche 1 bis 13 durchzuführen, wenn es auf einem oder mehreren Prozessoren ausgeführt wird.

**Revendications**

1. Procédé mis en œuvre par ordinateur pour fournir une preuve qu'une transaction de chaîne de blocs existe sur une chaîne de blocs, le procédé étant exécuté par une entité de preuve de Merkle (601) configurée pour stocker un ensemble d'identifiants de transactions d'un ensemble stocké respectif de transactions de chaîne de blocs, mais pas pour publier de nouveaux blocs de chaîne de blocs dans le réseau de chaînes de blocs, et le procédé comprenant :

l'obtention d'un identifiant de transaction cible d'une transaction de chaîne de blocs cible, l'identifiant de transaction cible faisant partie de l'ensemble d'identifiants de transactions stocké ;
l'obtention d'une preuve de Merkle cible pour la transaction de chaîne de blocs cible, dans laquelle une racine de Merkle cible correspondante est contenue dans un en-tête de bloc de la chaîne de blocs ; et
la production de la preuve de Merkle cible pour son utilisation par une partie requérante (602) en tant que preuve que la transaction de chaîne de blocs cible existe sur la chaîne de blocs.

2. Procédé selon la revendication 1, dans lequel l'entité de preuve de Merkle ne stocke pas la chaîne de blocs complète.

3. Procédé selon la revendication 1 ou la revendication 2, dans lequel l'obtention de la preuve de Merkle cible comprend le calcul d'un indice de l'identifiant de transaction cible dans une couche feuille d'un arbre de Merkle cible correspondant.

4. Procédé selon la revendication 3, comprenant l'envoi de l'indice à la partie requérante.

5. Procédé selon l'une quelconque des revendications précédentes, dans lequel ladite obtention de l'identifiant de transaction cible comprend l'obtention de l'identifiant de transaction cible de la partie requérante.

6. Procédé selon l'une quelconque des revendications précédentes, dans lequel ladite obtention de l'identifiant de transaction cible comprend l'obtention de la transaction de chaîne de blocs cible et la construction de l'identifiant de transaction cible sur la base de la transaction de chaîne de blocs cible.

7. Procédé selon l'une quelconque des revendications précédentes, dans lequel l'entité de preuve de Merkle stocke une preuve de Merkle respective pour un ou plusieurs de l'ensemble stocké d'identifiants de transaction incluant l'identifiant de transaction cible, et dans lequel ladite obtention de la preuve de Merkle cible comprend l'extraction de la preuve de Merkle cible à partir d'un emplacement de stockage.

8. Procédé selon la revendication 1, dans lequel l'entité de preuve de Merkle stocke une ou plusieurs racines de Merkle, chaque racine de Merkle étant basée sur un sous-ensemble respectif de l'ensemble stocké d'identifiants de transaction.

9. Procédé selon la revendication 8, comprenant l'envoi, à la partie requérante, de la racine de Merkle sur la base de l'identifiant de transaction cible.

10. Procédé selon la revendication 8 ou la revendication 9, dans lequel l'entité d'épreuve de Merkle stocke, pour chacune des une ou plusieurs racines de Merkle, un arbre de Merkle.

11. Procédé selon la revendication 10, dans lequel ladite obtention de la preuve de Merkle cible comprend l'extraction de la preuve de Merkle cible à partir d'un arbre de Merkle stocké comprenant l'identifiant de transaction cible.

12. Procédé mis en œuvre par ordinateur pour obtenir une preuve qu'une transaction de chaîne de blocs existe sur une chaîne de blocs, dans lequel une entité de preuve de Merkle (601) stocke un ensemble d'identifiants de transactions d'un ensemble stocké respectif de transactions de chaîne de blocs, l'entité de preuve de Merkle étant configurée pour stocker l'ensemble d'identifiants de transaction de l'ensemble stocké respectif de transactions de chaîne de blocs, mais pas pour publier de nouveaux blocs de chaîne de blocs sur le réseau de chaînes de blocs, le procédé étant exécuté par une partie requérante (601) et comprenant :

l'envoi, à l'entité de preuve de Merkle, d'une transaction de chaîne de blocs cible et/ou d'un identifiant de transaction cible de la transaction cible ; et
l'obtention, à partir de l'entité de preuve de Merkle, d'une preuve de Merkle cible pour la transaction de chaîne de blocs cible, la preuve de Merkle étant basée sur un ou plusieurs des ensembles stockés d'identifiants de transaction.

13. Procédé selon la revendication 12, comprenant l'envoi de la preuve de Merkle cible à une seconde partie requérante comme preuve que la transaction de chaîne de blocs cible existe sur la chaîne de blocs.

**14.** Équipement informatique comprenant :

une mémoire comprenant une ou plusieurs unités de mémoire ; et
un appareil de traitement comprenant une ou plusieurs unités de traitement, la mémoire stockant un code conçu pour s'exécuter sur l'appareil de traitement, le code étant configuré de telle sorte que, lorsqu'il est sur exécuté l'appareil de traitement, il mette en œuvre le procédé selon l'une quelconque des revendications 1 à 13.

**15.** Programme informatique incorporé sur un stockage lisible par ordinateur et configuré de façon, lorsqu'il est exécuté sur un ou plusieurs processeurs, à mettre en œuvre le procédé selon l'une quelconque des revendications 1 à 13.

# Figure 1

# Figure 2

152i

152j

202 · $Tx_0$ · 201

$Tx_1$ · 201 · 203

| $TxID_0$ | |
|---|---|
| Input(s) | Output(s) |
| **Input**<br>• Pointer to previous $Tx$<br>• Index of UTXO in previous $Tx$<br>• Unlocking script for unlocking from previous party<br><br>⋮<br><br>Optional further inputs<br><br>⋮ | $UTXO_0$<br>• Amount<br>• Locking script locking to Alice<br><br>⋮<br><br>Optional further $UTXOs$<br><br>⋮ |

203

202

| $TxID_1$ | |
|---|---|
| Input(s) | Output(s) |
| **Input**<br>• Pointer to $Tx_0$<br>• Index of $UTXO_0$ [within $Tx_0$]<br>• Unlocking script for unlocking $UTXO_0$ from Alice<br><br>⋮<br><br>Optional further inputs<br><br>⋮ | $UTXO_1$<br>• Amount<br>• Locking script locking to Bob<br><br>⋮<br><br>Optional further $UTXOs$<br><br>⋮ |

203

Transaction from Alice to Bob

↓

Validated by running: Locking script from output 203 of $Tx_0$, together with Alice's unlocking script from input 202 of $Tx_1$. This checks that Alice's unlocking script in $Tx_1$ meets the condition(s) defined in the locking script of previous transaction $Tx_0$.

# Figure 3A

105

Client application

UI layer

402

Transaction engine

401

403

# Figure 3B

Client app (Alice)

500

503

I 502

501

# Figure 4

# Figure 5

Merkle root, *R*

**Merkle path:**

- - → Path direction

◯ Required data

● Given data

# Figure 6A

600

104

Blockchain
Node

604

SPV client

601

Block header(s)
TxIDs (ordered for each block
header)
Merkle paths

Merkle Path
Server

Block header(s)

Target
TxID

Merkle path

Requesting
Party

602

Merkle path

603

Third Party

# Figure 6B

600B

104                                                              104

```
┌─────────────┐    Block header(s)         ┌─────────────┐
│ Blockchain  │    Merkle proofs           │ Blockchain  │
│    Node     │        TxIDs               │    node     │
└─────────────┘                            └─────────────┘
```

Merkle proofs,
TxIDs

601

Block header(s)

```
┌──────────────────────────────────────┐
│      General Merkle Path Server       │
│       ┌─────────────────┐             │   Transactions
│       │  Block header   │             │
│       │     server      │             │
│       └─────────────────┘             │
│       ┌─────────────────┐             │
│       │  Merkle path    │             │
│       │     server      │             │
│       └─────────────────┘             │
└──────────────────────────────────────┘
```

Block header(s)

TxID                    Merkle proofs

```
┌──────────────────────────────────────┐
│      Integrity Merkle Path Server     │
│  ┌─────────────────┐                  │
│  │  Block header   │   ┌────────────┐ │
│  │     server      │   │ Transaction│ │
│  └─────────────────┘   │    data    │ │
│  ┌─────────────────┐   └────────────┘ │
│  │  Merkle path    │                  │
│  │     server      │                  │
│  └─────────────────┘                  │
└──────────────────────────────────────┘
```

602                                              Block
                                                 header(s),
                                                 TxIDs

Transaction        Merkle          Block header(s),
Component          proof           Transactions

```
        ┌─────────────┐   Transactions,   ┌─────────────┐
603     │  Requesting │   Merkle proofs   │             │
        │    Party    │  ──────────────▶  │  SPV client │
        └─────────────┘                   └─────────────┘
```
                                          604

# Figure 7

Block headers

Merkle tree
internal nodes

Transaction IDs
(leaves)

# Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020165676 A1

**Non-patent literature cited in the description**

- **ALIN TOMESCU et al.** Catena: Preventing Lies with Bitcoin. *IACR, INTERNATIONAL ASSOCIATION FOR CRYPTOLOGIC RESEARCH*, 13 November 2016, vol. 20161115 (150307), 1-17